(19) Europäisches Patentamt
European Patent Office
Office européen des brevets

(11) **EP 2 193 173 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**29.05.2024 Patentblatt 2024/22**

(45) Hinweis auf die Patenterteilung:
**29.03.2017 Patentblatt 2017/13**

(21) Anmeldenummer: **08803671.0**

(22) Anmeldetag: **04.09.2008**

(51) Internationale Patentklassifikation (IPC):
**C09C 1/50** (2006.01)  **C09C 1/48** (2006.01)
**C08K 3/04** (2006.01)  **B82Y 30/00** (2011.01)
**C08L 21/00** (2006.01)

(52) Gemeinsame Patentklassifikation (CPC):
(C-Sets verfügbar)
**C09C 1/50; B82Y 30/00; C08K 3/04; C09C 1/48;**
C01P 2004/51; C01P 2004/64; C01P 2006/12;
C01P 2006/16; C01P 2006/19; C01P 2006/60

(Forts.)

(86) Internationale Anmeldenummer:
**PCT/EP2008/061701**

(87) Internationale Veröffentlichungsnummer:
**WO 2009/043676 (09.04.2009 Gazette 2009/15)**

(54) **RUSS, VERFAHREN ZU SEINER HERSTELLUNG UND SEINE VERWENDUNG**

CARBON BLACK, METHOD FOR THE PRODUCTION THEREOF, AND USE THEREOF

NOIR DE CARBONE, SON PROCÉDÉ DE PRODUCTION ET SON UTILISATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.10.2007 DE 102007047432**

(43) Veröffentlichungstag der Anmeldung:
**09.06.2010 Patentblatt 2010/23**

(73) Patentinhaber: **Orion Engineered Carbons GmbH**
**60528 Frankfurt am Main (DE)**

(72) Erfinder:
• **PELSTER, Thomas**
**50321 Brühl (DE)**
• **FREUND, Burkhard**
**24536 Neumünster (DE)**
• **FRÖHLICH, Joachim**
**92318 Neumarkt (DE)**
• **NIEDERMEIER, Werner**
**50321 Brühl (DE)**
• **VOGLER, Conny**
**53809 Ruppichteroth (DE)**

(74) Vertreter: **f & e patent**
**Braunsberger Feld 29**
**51429 Bergisch Gladbach (DE)**

(56) Entgegenhaltungen:
| | |
|---|---|
| EP-A- 0 384 080 | EP-A- 0 754 735 |
| EP-A- 0 949 303 | EP-A- 1 783 178 |
| EP-A1- 0 872 514 | WO-A-91/13944 |
| US-A- 4 327 069 | US-A- 4 765 964 |
| US-A- 4 879 104 | US-A- 4 927 607 |
| US-A- 5 093 407 | US-A1- 2011 207 872 |
| US-A1- 2016 024 270 | US-B2- 9 493 659 |

Bemerkungen:
Die Akte enthält technische Angaben, die nach dem Eingang der Anmeldung eingereicht wurden und die nicht in dieser Patentschrift enthalten sind.

(52) Gemeinsame Patentklassifikation (CPC): (Forts.)

    C-Sets
    **C08K 3/04, C08L 21/00**

**EP 2 193 173 B2**

**Beschreibung**

Die Erfindung betrifft ein Verfahren zur Herstellung von Ruß.

Ruße werden üblicherweise eingesetzt als Pigmente, Füllstoffe, Verstärkerfüllstoffe und für eine Vielzahl weiterer verschiedener Anwendungen. Zum Beispiel werden Ruße als Verstärkerfüllstoffe in Gummimischungen eingesetzt, die als Ausgangsmaterial für Laufflächen von Fahrzeugreifen Verwendung finden können.

Es ist allgemein bekannt, dass die spezifische Oberfläche von Ruß einen erheblichen Einfluss auf das Verstärkungsverhalten von Ruß in Gummimischungen aufweist. Je höher die spezifische Oberfläche dabei ist, desto besser das Verstärkungsverhalten und insbesondere das Abriebverhalten von Reifenlaufflächen [G. Kraus, Angewandte Makromolekulare Chemie, Volume 60/61 (1977), Seite 215]. Eine hohe spezifische Oberfläche bedingt allerdings den Nachteil, dass die Hysterese in der Gummimischung hoch ist, was einen erhöhten Rollwiderstand der Reifenlaufflächen zur Folge hat [W.M. Hess et al., Rubber Chemistry and Technology, Volume 56, Seite 390]. Ein höherer Rollwiderstand von Reifenlaufflächen bedingt einen höheren Kraftstoffverbrauch und damit hohen Energieverbrauch beziehungsweise Kohlendioxid Ausstoß. Dies ist aus ökonomischen und ökologischen Gesichtspunkten unerwünscht.

Aus ökonomischen und ökologischen Gesichtspunkten ist es daher erwünscht, bei gegebener spezifischer Oberfläche die Hysterese von Gummimischungen und damit den Rollwiderstand von Reifenlaufflächen weiter abzusenken. Es ist bekannt, dass dies bei gegebener spezifischer Oberfläche durch eine Verbreiterung der Aggregatgrößenverteilung erreicht werden kann [W.M. Hess et al.,Rubber Chemistry and Technology, Volume 56, Seite 390]. Gleichzeitig mit der Verbreiterung der Aggregatgrößenverteilung wird jedoch die Farbstärke des Rußes (Tint strength) verringert [C.J. Stacy et al., Rubber Chemistry and Technology, Volume 48, Seite 538]. Weiterhin ist bekannt, dass eine verbreiterte Aggregatgrößenverteilung von Ruß, insbesondere bei hoher Beanspruchung, Einbußen im Abriebverhalten von Gummimischungen und damit Einbußen im Abriebverhalten von Reifenlaufflächen nach sich zieht [W.M. Hess et al., Rubber Chemistry and Technology, Volume 56, Seite 390]. Eine Verbreiterung der Aggregatgrößenverteilung ist daher günstig für den Rollwiderstand, jedoch in der Regel gekoppelt an eine Verschlechterung des Abriebverhaltens.

Aus US 2005/0256249 ist ein Kohlenstoffmaterial bekannt mit einem $\Delta$D50/M größer 0,9 und einem Heterogenitätsindex größer 2,3.

Aus EP 0754735 sind Furnace-Ruße bekannt, die sich gegenüber Vergleichsrußen mit gleicher CTAB-Oberfläche bei Einarbeitung in SSBR/BR-Gummimischungen durch einen geringeren Rollwiderstand bei gleichem oder besserem Nassrutschverhalten auszeichnen. Sie können in konventionellen Rußreaktoren hergestellt werden, indem die Verbrennung in der Brennkammer so geführt wird, dass sich Rußkeime bilden, die unmittelbar mit dem Rußrohstoff in Kontakt gebracht werden.

Nachteil der aus EP 0754735 bekannten Ruße ist der zu niedrige Abriebwiderstand bei gleichzeitig niedrigem Rollwiderstand (Verlustfaktor tan $\delta$) in Kautschukmischungen.

Aus EP 0949303 sind Ruße bekannt, die gegenüber den Rußen aus EP 0754735 eine Aggregatgrößenverteilung mit geringeren Anteilen an Aggregaten mit großen Durchmessern aufweisen. Dies führt zu einem verbesserten Abriebverhalten von Gummimischungen. Die Rußreaktoren werden so gefahren, dass sich Rußkeime bilden, die unmittelbar mit dem Rußrohstoff in Kontakt gebracht werden und die Zufuhr von Verbrennungsluft und Rußrohstoff in geeigneter Weise erhöht wird.

Nachteil der aus EP 0949303 bekannten Ruße ist die erniedrigte Farbstärke und der gegenüber den Rußen aus EP 0754735 verbesserte Abriebwiderstand bei gleichzeitig niedrigem Rollwiderstand (Verlustfaktor tan $\delta$), jedoch nicht optimaler Balance zwischen Abriebwiderstand und Rollwiderstand.

Aus EP 1783178 ist ein Furnacerußverfahren bekannt, bei dem ein Rußrohstoff an einer ersten Stufe zugeführt und mit einem Strom heißer Gase vereinigt wird um einen Präkursor, im Wesentlichen bestehend aus einem Ruß in einem Reaktionsstrom zu formen und nachfolgend weiterer Rußrohstoff zu diesem Präkursor zugeführt wird, um den Reaktionsstrom damit partiell abzuschrecken und anschließend den gesamten Reaktionsstrom komplett abzuschrecken. Der Strom heißer Gase in EP 1783178 kann als Verbrennungsgas aus der Reaktion eines Brennstoffes mit einem oxidativen Medium, zum Beispiel Luft, entstehen, wobei das Verhältnis von Luft zu Brennstoff von 1:1 (stöchiometrisch) bis unendlich variiert werden kann. Der Brennstoff kann fest, flüssig oder gasförmig sein.

WO 91/13944 offenbart ein Verfahren, bei dem 40-85 Gew.-% des Rußrohstoffs im ersten Drittel der Reaktionszone und die restliche Menge des Rußrohstoffs stromaufwärts in den Reaktor eingedüst wird. Die so hergestellten Ruße haben eine CTAB-Oberfläche von 120-160 m2/g.

US Patent 4,327,069 offenbart in den Beispielen ein Verfahren zur Herstellung von Ruß, bei dem 41 Gew.-% Rußrohstoff im ersten Drittel der Reaktionszone und Zugabe der Restmenge stromaufwärts erfolgt. Als Brennstoff wird Methan eingesetzt. Die so hergestellten Ruße haben eine CTAB-Oberfläche von 73-140 m2/g.

Aufgabe der vorliegenden Erfindung ist es, einen Ruß zur Verfügung zu stellen, der in Kautschukmischungen eine gute Balance aus hohem Abriebwiderstand (= niedrigem Abrieb) und niedrigem Rollwiderstand hat.

Gegenstand der Erfindung ist ein Verfahren zur Herstellung eines Rußes, welcher dadurch gekennzeichnet ist, dass die CTAB-Oberfläche 100 - 160 m$^2$/g, vorzugsweise 100 - 149 m$^2$/g, besonders bevorzugt 100 - 144 m$^2$/g,

3

ganz besonders bevorzugt 105 - 140 m$^2$/g, das Quartile-Ratio größer 1,60, vorzugsweise 1,65 - 2,30, besonders bevorzugt 1,70 - 2,30, ganz besonders bevorzugt 1,75 - 2,30, insbesondere bevorzugt 1,80 - 2,30, außerordentlich bevorzugt 1,85 - 2,25, und der FP-Index > 0, vorzugsweise > 0,5, besonders bevorzugt > 1,0, ganz besonders bevorzugt > 1,5, ist.

Der FP-Index wird berechnet nach der Gleichung FP-Index = Tint strength - (65 + (1,057 g/m$^2$) * CTAB - (0,002745 g$^2$/m$^4$) * CTAB * CTAB - (25,96 g/cm$^3$) * COAN - (0,201 g/m$^2$) * (NSA - CTAB)) + 6,57502 - 847817 * EXP(-6,94397 * (Quartile-Ratio)).

Der CTAB Wert wird nach ASTM D-3765-04 gemessen.

Der NSA Wert wird nach ASTM D-6556-04 gemessen, mit folgenden Parametern: relative pressures: section 10.4.4.

Der COAN Wert wird nach ASTM D-3493-06 gemessen, mit folgenden Parametern: Oil: paraffin; method for end-point determination: procedure A.

Die Tint strength wird nach ASTM D-3265-06 gemessen, mit folgenden Parametern: Hoover Muller Paste Preparation, Erichsen-tint-tester - film drawdown method.

Das Quartile-Ratio wird aus der Aggregatgrößenverteilung berechnet.

Die Aggregatgrößenverteilung wird dabei nach der Norm ISO 15825, first edition, 2004-11-01, bestimmt, wobei folgende Modifikationen angewendet werden:
Ergänzung in Absatz 4.6.3 der Norm ISO 15825: Der mode bezieht sich auf die Massenverteilungskurve (mass distribution curve).

Ergänzung in Absatz 5.1 der Norm ISO 15825: Es wird das Gerät BI-DCP Particle Sizer und die zugehörige Auswertesoftware dcplw32, Version 3.81, verwendet, alles erhältlich bei der Firma Brookhaven Instruments Corporation, 750 Blue Point Rd., Holtsville, NY, 11742.

Ergänzung zu Absatz 5.2 der Norm ISO 15825: Es wird das Ultraschall-Steuergerät GM2200, der Schallwandler UW2200, sowie die Sonotrode DH13G verwendet. Ultraschall Steuergerät, Schallwandler und Sonotrode sind erhältlich bei der Firma Bandelin electronic GmbH & Co. KG, Heinrichstraße 3-4, D-12207 Berlin. Dabei werden am Ultraschall-Steuergerät folgende Werte eingestellt: Power % = 50, Cycle = 8. Dies entspricht einer eingestellten Nennleistung von 100 Watt und einem eingestellten Puls von 80%.

Ergänzung zu Absatz 5.2.1 der Norm ISO 15825: Die Ultraschallzeit wird auf 4,5 Minuten festgelegt.

Abweichend zu der im Absatz 6.3 der Norm ISO 15825 angegebenen Definition wird "Surfactant" wie folgt definiert: "Surfactant" ist ein anionisches Tensid vom Typ Nonidet P 40 Substitute von der Firma Fluka, erhältlich bei Sigma-Aldrich Chemie GmbH, Industriestrasse 25, CH-9471 Buchs SG, Switzerland.

Abweichend zu der im Absatz 6.5 der Norm ISO 15825 angegebenen Definition der Spinflüssigkeit ist die Spinflüssigkeit wie folgt definiert: Zur Herstellung der Spinflüssigkeit werden 0,25 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Spinflüssigkeit darf nach deren Herstellung höchstens 1 Woche verwendet werden.

Abweichend zu der im Absatz 6.6 der Norm ISO 15825 angegebenen Definition der Dispersionsflüssigkeit ist die Dispersionsflüssigkeit wie folgt definiert: Zur Herstellung der Dispersionsflüssigkeit werden 200 ml Ethanol (Absatz 6.2), und 0,5 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Dispersionsflüssigkeit darf nach deren Herstellung höchstens 1 Woche verwendet werden.

Ergänzung zu Absatz 7 der Norm ISO 15825: Es wird ausschließlich geperlter Ruß verwendet.

Die Anweisungen in den Absätzen 8.1, 8.2, 8.3 der Norm ISO 15825 werden zusammenfassend durch folgende Anweisung ersetzt: Der geperlte Ruß wird in einem Achatmörser leicht zerdrückt. 20 mg Ruß werden dann in einem 30 ml Rollrandfläschchen (Durchmesser 28 mm, Höhe 75 mm, Wanddicke 1,0 mm) mit 20 ml Dispersionslösung (Absatz 6.6) versetzt und in einem Kühlbad (16°C +/- 1°C) für die Dauer von 4,5 Minuten (Absatz 5.2.1) mit Ultraschall (Absatz 5.2) behandelt und damit in der Dispersionslösung suspendiert. Nach der Ultraschall-Behandlung wird die Probe binnen 5 Minuten in der Zentrifuge gemessen.

Ergänzung zu Absatz 9 der Norm ISO 15825: Der Wert für die einzutragende Dichte von Ruß beträgt 1,86 g/cm$^3$. Die Temperatur für die einzutragende Temperatur wird gemäß Absatz 10.11 bestimmt. Für den Typ der Spinflüssigkeit wird die Option "Aqueous" ausgewählt. Damit ergibt sich für die Dichte der Spinflüssigkeit ein Wert von 0,997 (g/cc), und für die Viskosität der Spinflüssigkeit ein Wert von 0,917 (cP). Die Lichtstreukorrektur erfolgt mit den in der Software dcplw 32 anwählbaren Optionen: Datei = carbon.prm; Mie-Correction.

Ergänzung zu Absatz 10.1 der Norm ISO 15825: Die Zentrifugengeschwindigkeit ist auf 11000 r/min festgelegt.

Ergänzung zu Absatz 10.2 der Norm ISO 15825: Anstatt 0,2 cm$^3$ Ethanol (Absatz 6.2) werden 0,85 cm$^3$ Ethanol (Absatz 6.2) injiziert.

Ergänzung zu Absatz 10.3 der Norm ISO 15825: Es werden exakt 15 cm$^3$ Spinflüssigkeit (Absatz 6.5) injiziert. Anschließend werden 0,15 cm$^3$ Ethanol (Absatz 6.2) injiziert.

Die Anweisung Absatz 10.4 der Norm ISO 15825 entfällt komplett.

Ergänzung zu Absatz 10.7 der Norm ISO 15825: Unmittelbar nach dem Start der Datenaufzeichnung überschichtet man die Spinflüssigkeit in der Zentrifuge mit 0,1 cm$^3$ Dodecan (Absatz 6.4).

Ergänzung zu Absatz 10.10 der Norm ISO 15825: Für den Fall, dass die Messkurve die Basislinie nicht binnen einer Stunde wieder erreicht, wird die Messung genau nach 1 Stunde Messdauer abgebrochen. Es erfolgt kein Neustart bei einer geänderten Zentrifugendrehzahl.

Ergänzung zu Absatz 10.11 der Norm ISO 15825: Anstelle der in der Anweisung beschriebenen Methode zur Ermittlung der Messtemperatur wird die Messtemperatur T, welche in das Computerprogramm einzutragen ist, wie folgt ermittelt:

$$T = 2/3\ (Te - Ta) + Ta,$$

wobei Ta die Temperatur der Messkammer vor der Messung und Te die Temperatur der Messkammer nach der Messung bezeichnet. Die Temperaturdifferenz sollte 4° C nicht übersteigen.

Die Fraktion der Teilchen > 150 nm der Aggregatgrößenverteilung kann kleiner 20 Gew.-%, vorzugsweise kleiner 14 Gew.-%, besonders bevorzugt kleiner 10 Gew.-%, sein.

Die Fraktion > 150 nm bezeichnet den Gewichtsanteil der Aggregate, die einen Stokesdurchmesser größer als 150 nm aufweisen, und wird ebenfalls aus der Aggregatgrößenverteilung gemäß der oben beschriebenen Norm ISO 15825 erhalten.

Das Verhältnis aus dem ΔD-50 Wert und dem mode kann größer 1,0, bevorzugt größer 1,05, ganz besonders bevorzugt größer oder gleich 1,10, sein.

Der ΔD-50 Wert und der mode werden ebenfalls aus der Aggregatgößenverteilung gemäß der oben beschriebenen Norm ISO 15825 erhalten.

Die Tint strength kann größer 110, vorzugsweise größer 114, besonders größer 117, ganz besonders größer 120, sein.

Der COAN Wert kann 90 - 130 cm$^3$/100g sein.

Der Ruß kann nicht oberflächenmodifiziert und nicht nachbehandelt sein.

Der pH-Wert des erfindungsgemäßen Rußes kann > 5 sein.

Gegenstand der Erfindung ist ein Verfahren zur Herstellung des vorstehend beschriebenen Rußes in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser, welches dadurch gekennzeichnet ist, dass 60-90 Gew.-%, vorzugsweise 75-85 Gew.-%, des Rußrohstoffes im ersten Drittel der Reaktionszone und die restliche Menge des Rußrohstoffes stromaufwärts an mindestens einer weiteren Stelle in den Reaktor eingedüst wird und der Brennstoff so geführt wird, dass beim ersten Auftreffen auf den Rußrohstoff 90 - 100 Gew.-%, vorzugsweise 99 - 100 Gew.-%, des Brennstoffes verdampft sind und 5 ms vor Auftreffen auf den Rußrohstoff 80 - 99 Gew.-%, vorzugsweise 90 - 99 Gew.-%, besonders bevorzugt 92 - 98 Gew.-%, des Brennstoffes verdampft sind.

Als Brennstoff-Zerstäuber können sowohl reine Druckzerstäuber (Einstoffzerstäuber) als auch Zweistoffzerstäuber mit innerer oder äußerer Mischung eingesetzt werden. Die erfindungsgemäße Führung des Brennstoffes kann sowohl mit reinen Druckzerstäubern (Einstoffzerstäubern) als auch Zweistoffzerstäubern mit innerer oder äußerer Mischung erreicht werden, indem die Bedingungen so gewählt werden, dass die bei der Zerstäubung erzielte Tropfengröße, die Verweilzeit dieser Tropfen bis zum Auftreffen auf den Rußrohstoff und die Reaktionstemperaturen aufeinander abgestimmt werden. Insbesondere durch die Verwendung von Zweistoffzerstäubern und flüssigem Brennstoff kann die Tropfengröße in einem weiten Bereich unabhängig vom Durchsatz kontrolliert und damit auf die Verweilzeit des Brennstoffes bis zum Auftreffen auf den Rußrohstoff und die Reaktionstemperaturen abgestimmt werden.

Die Tropfengrößenverteilung kann mit Hilfe optischer Methoden bestimmt werden. Verschiedene kommerzielle Düsenhersteller bieten diese Messungen als Dienstleistung an, zum Beispiel Düsen-Schlick GmbH, Hutstraße 4, D-96253 Untersiemau/Coburg, Deutschland (www.duesen-schlick.de). Die Verweilzeit der Tropfen und die Reaktionstemperaturen im Prozess können an Hand von computergestützten strömungsmechanischen Simulationsrechnungen bestimmt werden. Zum Beispiel bietet die kommerzielle Software "Fluent", Version 6.3, der Firma Fluent (Fluent Deutschland GmbH, Birkenweg 14a, 64295 Darmstadt) die Möglichkeit, den verwendeten Furnacereaktor abzubilden und nach Eingabe aller zugeführten Prozessströme einschließlich der gemessenen Tropfengrößenverteilung mit Hilfe der hinterlegten chemischen Modelle die Verweilzeiten und Verdampfungsraten der Brennstofftropfen und die Reaktionstemperaturen zu berechnen.

Der Brennstoff kann flüssig oder teilweise flüssig und teilweise gasförmig sein.

Die Rußrohstoffe können mittels Radiallanzen eingedüst werden. Es können 2-32, vorzugsweise 4-16, besonders bevorzugt 4-8, Radiallanzen eingesetzt werden.

Der Rußrohstoff kann flüssig oder gasförmig oder teilweise flüssig und teilweise gasförmig sein.

Der flüssige Rußrohstoff kann durch Druck, Dampf, Pressluft oder den gasförmigen Rußrohstoff zerstäubt werden.

Als flüssiger Rußrohstoff können flüssige aliphatische oder aromatische, gesättigte oder ungesättigte Kohlenwasserstoffe oder Mischungen hiervon, Destillate aus dem Steinkohlenteer oder Rückstandsöle, die beim katalytischen Cracken von Erdölfraktionen beziehungsweise bei der Olefinherstellung durch Cracken von Naphtha oder Gasöl entstehen, eingesetzt werden.

Als gasförmiger Rußrohstoff können gasförmige aliphatische, gesättigte oder ungesättigte Kohlenwasserstoffe, Mischungen hiervon oder Erdgas eingesetzt werden.

Als Messzahl zur Kennzeichnung des Luftüberschusses wird häufig der sogenannte K-Faktor verwendet. Es handelt sich bei dem K-Faktor um das Verhältnis der für eine stöchiometrische Verbrennung des Brennstoffes benötigten Luftmenge zu der tatsächlich der Verbrennung zugeführten Luftmenge. Ein K-Faktor von 1 bedeutet also eine stöchiometrische Verbrennung. Bei Luftüberschuss ist der K-Faktor kleiner 1. Dabei können wie bei bekannten Rußen K-Faktoren zwischen 0,2 und 0,9 angewendet werden. Bevorzugt kann mit K-Faktoren zwischen 0,6 und 0,8 gearbeitet werden.

Das beschriebene Verfahren ist nicht auf eine bestimmte Reaktorgeometrie beschränkt. Es kann vielmehr auf verschiedene Reaktortypen und Reaktorgrößen angepasst werden.

Als Rußrohstoff-Zerstäuber können sowohl reine Druckzerstäuber (Einstoffzerstäuber) als auch Zweistoffzerstäuber mit innerer oder äußerer Mischung eingesetzt werden, wobei als Zerstäubungsmedium der gasförmige Rußrohstoff verwendet werden kann.

Es können zur Zerstäubung von flüssigem Rußrohstoff Zweistoffzerstäuber eingesetzt werden. Während bei Einstoffzerstäubern eine Änderung des Durchsatzes auch zu einer Änderung der Tröpfchengröße führen kann, kann die Tröpfchengröße bei Zweistoffzerstäubern weitgehend unabhängig vom Durchsatz beeinflusst werden.

Bei gleichzeitiger Verwendung von Rußöl und gasförmigen Kohlenwasserstoffen, wie zum Beispiel Methan, als Rußrohstoff, können die gasförmigen Kohlenwasserstoffe getrennt vom Rußöl über einen eigenen Satz von Gaslanzen in den Strom des heißen Abgases injiziert werden.

Die nach dem erfindungsgemäßen Verfahren hergestellten Ruße können als Füllstoff, Verstärkerfüllstoff, UV-Stabilisator, Leitfähigkeitsruß oder Pigment verwendet werden. Die Ruße können in Kautschuk, Kunststoff, Druckfarben, Tinten, Inkjet-Tinten, Tonern, Lacken, Farben, Papier, Bitumen, Beton und anderen Baustoffen eingesetzt werden. Die Ruße können als Reduktionsmittel in der Metallurgie angewendet werden.

Der nach dem erfindungsgemäßen Verfahren hergestellte Ruß kann als Verstärkerruß in Kautschukmischungen verwendet werden.

Ebenfalls hierin beschrieben sind dementsprechend Kautschukmischungen, welche dadurch gekennzeichnet sind, dass sie mindestens einen Kautschuk, bevorzugt mindestens einen Dienkautschuk, besonders bevorzugt mindestens Naturkautschuk, und mindestens einen nach dem erfindungsgemäßem Verfahren hergestellten Ruß enthalten.

Der Ruß kann in Mengen von 10 bis 150 phr (parts per hundred rubber), bevorzugt 20 bis 100 phr, besonders bevorzugt 30 bis 90 phr, ganz besonders bevorzugt 30 bis 80 phr, bezogen auf die Menge des eingesetzten Kautschuks, eingesetzt werden.

Die Kautschukmischung kann Kieselsäure, vorzugsweise gefällte Kieselsäure, enthalten. Die Kautschukmischung kann Organosilane, beispielsweise Bis(triethoxysilylpropyl)polysulfid oder (Mercaptoorganyl)-alkoxysilane enthalten.

Die Kautschukmischung kann Kautschukhilfsmittel enthalten.

Für die Herstellung der Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem

- Polybutadien (BR),

- Polyisopren (IR),

- Styrol/Butadien-Copolymerisate, beispielsweise Emulsions-SBR (E-SBR) oder Lösungs-SBR (L-SBR), vorzugsweise mit einem Styrolgehalt von 1 bis 60 Gew.-%, besonders bevorzugt 2 bis 50 Gew.-%, bezogen auf das Gesamtpolymer,

- Chloropren (CR),

- Isobutylen/Isopren-Copolymerisate (IIR),

- Butadien/Acrylnitril-Copolymere, vorzugsweise mit einem Acrylnitrilgehalt von 5 bis 60 Gew.-%, vorzugsweise 10 bis 50 Gew.-%, bezogen auf das Gesamtpolymer (NBR),

- teilhydrierter oder vollständig hydrierter NBR-Kautschuk (HNBR),

- Ethylen/Propylen/Dien-Copolymerisate (EPDM)

- Ethylen/Propylen-Copolymerisate (EPM) oder

- oben genannte Kautschuke, die zusätzlich funktionelle Gruppen besitzen, wie zum Beispiel Carboxy- , Silanol- oder Epoxygruppen, beispielsweise Epoxidierter NR, Carboxy-funktionalisierter NBR oder Silanol- (-SiOH) bzw. Siloxy-funktionalisierter (-Si-OR) SBR,

sowie Mischungen dieser Kautschuke.

Für die Herstellung von LKW-Reifenlaufflächen kann insbesondere Naturkautschuk sowie dessen Mischung mit Dienkautschuken eingesetzt werden.

Für die Herstellung von PKW-Reifenlaufflächen kann insbesondere SBR-Kautschuk sowie dessen Mischung mit anderen Dien-Kautschuken eingesetzt werden.

Die Kautschukmischungen können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, Alkoxyterminiertes Polyethylenglykol oder Hexantriol, die der Kautschukindustrie bekannt sind.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 phr bezogen auf Kautschuk sein.

Als Vernetzer können Schwefel, organische Schwefelspender oder Radikalbildner dienen. Die erfindungsgemäßen Kautschukmischungen können darüber hinaus Vulkanisationsbeschleuniger enthalten.

Beispiele für geeignete Vulkanisationsbeschleuniger können Mercaptobenzthiazole, Sulfenamide, Guanidine, Thiurame, Dithiocarbamate, Thioharnstoffe und Thiocarbonate sein.

Die Vulkanisationsbeschleuniger und Vernetzer können in Mengen von 0,1 bis 10 phr, bevorzugt 0,1 bis 5 phr, bezogen auf Kautschuk, eingesetzt werden.

Die Abmischung der Kautschuke mit dem Füllstoff, gegebenenfalls Kautschukhilfsmitteln und gegebenenfalls den Organosilanen kann in üblichen Mischaggregaten, wie Walzen, Innenmischern und Mischextrudern, durchgeführt werden. Üblicherweise können solche Kautschukmischungen im Innenmischer hergestellt werden, wobei zunächst in einer oder mehreren aufeinanderfolgenden thermomechanischen Mischstufen die Kautschuke, der Ruß, gegebenenfalls die Kieselsäure und gegebenenfalls die Organosilane und die Kautschukhilfsmittel bei 100 bis 170°C eingemischt werden. Dabei können sich die Zugabereihenfolge und der Zugabezeitpunkt der Einzelkomponenten entscheidend auf die erhaltenen Mischungseigenschaften auswirken. Die so erhaltene Kautschukmischung kann dann üblicherweise in einem Innenmischer oder auf einer Walze bei 40-130°C, bevorzugt 50 - 120°C, mit den Vernetzungschemikalien versetzt und zur sogenannten Rohmischung für die nachfolgenden Prozessschritte, wie zum Beispiel Formgebung und Vulkanisation, verarbeitet werden.

Die Vulkanisation der Kautschukmischungen kann bei Temperaturen von 80 bis 200°C, bevorzugt 130 bis 180°C, gegebenenfalls unter Druck von 10 bis 200 bar erfolgen.

Die Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen, Profilen und Dämpfungselementen.

Der nach dem erfindungsgemäßen Verfahren hergestellte Ruß hat den Vorteil eines guten Abriebwiderstandes bei gleichzeitig gutem Rollwiderstand in Kautschukmischungen.

**Beispiele**

Beispiel 1 (Rußherstellung):

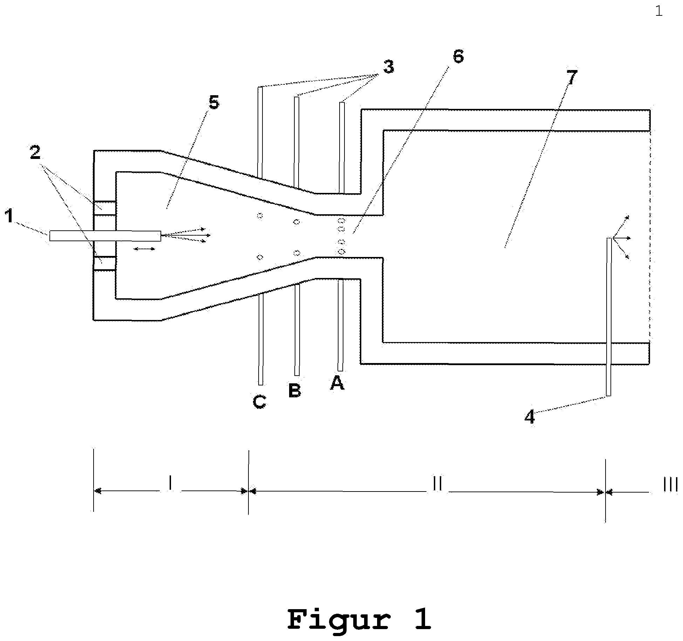

Eine Reihe von Rußen werden in dem in Figur 1 dargestellten Rußreaktor hergestellt.

Figur 1 zeigt einen Längsschnitt durch den Furnacereaktor. Der Rußreaktor besitzt eine Brennkammer **5,** in der das heiße Prozessgas für die Pyrolyse des Rußöles durch Verbrennen von Brennstoff unter Zufuhr von einem Überschuss an Luftsauerstoff erzeugt wird. Für die Herstellung der Ruße nach dem erfindungsgemäßen Verfahren wird als Brennstoff Rußöl verwendet. Für die Herstellung des Vergleichsrußes wird als Brennstoff Erdgas verwendet.

Die Zufuhr der Verbrennungsluft erfolgt über mehrere Öffnungen **2,** die konzentrisch über die kreisförmige Stirnwand der Brennkammer verteilt sind. Der Brennstoff wird über die axiale Brennerlanze **1** in die Brennkammer eingeführt. Die Brennerlanze kann zur Optimierung der erfindungsgemäßen Prozessführung in axialer Richtung verschoben werden. Die Brennkammer läuft konisch auf die Engstelle **6** zu. Der Rußrohstoff wird über Radiallanzen **3** in beziehungsweise vor der Engstelle eingedüst. Nach Durchqueren der Engstelle expandiert das Reaktionsgasgemisch in die Reaktionskammer **7.**

Mit A, B und C sind verschiedene Positionen für die Injektion des Rußöls in das heiße Prozessgas mittels der Öllanzen **3** bezeichnet. Die Öllanzen sind an ihrem Kopf mit geeigneten Sprühdüsen versehen. An jeder Injektionsposition sind mindestens vier Injektoren über den Umfang des Reaktors verteilt.

In der Abbruchzone wird durch die Quenchwasserlanze **4** Wasser eingesprüht.

Verbrennungszone, Reaktionszone und Abbruchzone sind in Figur 1 durch die römischen Ziffern I bis III gekennzeichnet. Ihre exakte axiale Ausdehnung hängt von der jeweiligen Positionierung der Brennerlanze, der Öllanzen und der Quenchwasserlanze ab.

Die Abmessungen des verwendeten Reaktors sind der folgenden Aufstellung zu entnehmen:

|  |  | I |
|---|---|---|
| Größter Durchmesser der Brennkammer: | | 930 mm |
| Länge der Brennkammer bis Engstelle: | | 1660 mm |
| Länge des konischen Teils der Brennkammer: | | 1300 mm |
| Durchmesser der Engstelle: | | 114 mm |
| Länge der Engstelle: | | 80 mm |
| Durchmesser der Reaktionskammer: | | 240 mm |
| Position der Öllanzen [1] | A | 40 mm |
| | B | - 215 mm |
| | C | - 500 mm |
| Maximale Position der Quenchwasserlanze(n) [1] | | 8250 mm |

[1] gemessen vom Eintritt in die Engstelle (+: nach Eintritt -: vor Eintritt)

Zur Herstellung der Ruße nach dem erfindungsgemäßen Verfahren werden als Brennstoff und Rußrohstoff ein Rußöl mit einem Kohlenstoffgehalt von 92 Gew.-% und einem Wasserstoffgehalt von 6 Gew.-% eingesetzt. Zur Herstellung des Vergleichsrußes wird als Brennstoff Erdgas und als Rußrohstoff ein Rußöl mit einem Kohlenstoffgehalt von 92 Gew.-% und einem Wasserstoffgehalt von 6 Gew.-% eingesetzt.

Die Reaktorparameter für die Herstellung der Ruße sind in Tabelle 1 aufgeführt. Es werden 5 verschiedene Ruße hergestellt (Nach dem erfindungsgemäßen Verfahren hergestellte Ruße 1 bis 4 sowie Vergleichsruß 5). Die Herstellbedingungen unterscheiden sich insbesondere bezüglich der Menge des in beziehungsweise vor der Engstelle injizierten Rußrohstoffes.

Die hergestellten Ruße werden vor der Charakterisierung und Einarbeitung in die Gummimischungen nach den üblichen Verfahren nass geperlt.

Tabelle 1:

| Reaktorparameter | Einheit | Ruß 1 | Ruß 2 | Ruß 3 | Ruß 4 | Vergleichsruß 5 |
|---|---|---|---|---|---|---|
| Verbrennungsluft | $Nm^3/h$ | 2800 | 2800 | 2601 | 2803 | 3301 |
| Temperatur der Verbrennungsluft | °C | 620 | 620 | 620 | 620 | 620 |
| Brennstoff (Rußöl) | kg/h | 199 | 201 | 220 | 202 | 0 |
| Brennstoff (Erdgas) | $Nm^3/h$ | 0 | 0 | 0 | 0 | 238 |
| Zerstäuberluft | $Nm^3/h$ | 190 | 190 | 190 | 190 | 0 |
| Rußrohstoff Pos. A | Kg/h | 600 | 610 | 454 | 455 | 0 |
| Rußrohstoff Pos. B | Kg/h | 140 | 140 | 115 | 105 | 570 |
| Rußrohstoff Pos. C | Kg/h | 0 | 0 | 0 | 0 | 0 |
| Rußöl-Temperatur | °C | 117 | 119 | 120 | 118 | 120 |
| Additiv ($K_2CO_3$) | g/h | 7 | 36 | 18 | 65 | 239 |
| Quenchposition | mm | 1095 | 1960 | 1960 | 1095 | 1095 |

(fortgesetzt)

| Reaktorparameter | Einheit | Ruß 1 | Ruß 2 | Ruß 3 | Ruß 4 | Vergleichsruß 5 |
|---|---|---|---|---|---|---|
| Verdampfter Brennstoff 5 ms vor erstem Auftreffen auf den Rußrohstoff | Gew.-% | 98 | 98 | 92 | 98 | 100 |
| Verdampfter Brennstoff beim Auftreffen auf den Rußrohstoff | Gew.-% | 100 | 100 | 100 | 100 | 100 |
| 1) Gemessen vom Beginn der Engstelle | | | | | | |

Der Anteil des verdampften Brennstoffes 5 ms vor dem erstem Auftreffen auf den Rußrohstoff und des verdampften Brennstoffes beim Auftreffen auf den Rußrohstoff werden mit dem Programm "Fluent", Version 6.3 durch computergestützte strömungsmechanische Simulationsrechnung berechnet.

Die rußanalytischen Kenndaten der hergestellten Ruße sind in Tabelle 2 aufgeführt:

Tabelle 2:

| Analytische Kenndaten Ruß | | Gruppe 1 | | | Gruppe 2 | | Gruppe 3 | | Gruppe 4 | |
|---|---|---|---|---|---|---|---|---|---|---|
| | | Vergleichsruß 1 | Vergleichsruß 2 | Ruß 1 | Vergleichsruß 3 | Ruß 2 | Vergleichsruß 4 | Ruß 3 | Vergleichsruß 5 | Ruß 4 |
| | | N 121 | Ecorax 1720 | | N 220 | | N 134 | | | |
| **Analytische Daten** | | | | | | | | | | |
| **CTAB** | $m^2/g$ | 119,1 | 117,1 | 120,9 | 110,0 | 111,6 | 129,3 | 134,5 | 146,7 | 152,4 |
| COAN | $cm^3/100g$ | 111,9 | 109,6 | 118,5 | 102,5 | 102,1 | 101,8 | 112,7 | 109,3 | 100,8 |
| NSA | $m^2/g$ | 118,3 | 125,8 | 122,7 | 113,3 | 110,1 | 134,9 | 144,0 | 145,3 | 158,3 |
| Quartile Ratio | | 1,60 | 2,01 | 1,91 | 1,49 | 1,98 | 1,55 | 1,95 | 1,59 | 2,19 |
| Tint strength | | 120,7 | 107,6 | 121,5 | 122,5 | 120,8 | 131,9 | 129,4 | 136,3 | 130,4 |
| **FP-Index** | | **-8,47** | **-7,49** | **5,06** | **-18,93** | **3,90** | **-7,69** | **8,52** | **-3,61** | **1,79** |
| Fraction >150nm | % | 1,1 | 14,7 | 8,1 | 0,4 | 9,9 | 1,3 | 5,7 | 0,1 | 5,6 |
| mode | nm | 73 | 68 | 58 | 74 | 57 | 64 | 54 | 60 | 43 |
| $\Delta$D-50 | nm | 61 | 76 | 66 | 54 | 68 | 50 | 72 | 53 | 68 |
| $\Delta$D-50 / mode | | 0,84 | 1,12 | 1,14 | 0,73 | 1,19 | 0,78 | 1,33 | 0,88 | 1,58 |

Bei dem Vergleichsruß 1 handelt es sich um Corax® N 121 von Evonik Degussa GmbH. Bei dem Vergleichruß 2 handelt es sich um Ecorax® 1720 von Evonik Degussa GmbH. Der Vergleichsruß 2 wird nach dem in EP 0949303 beschriebenen Verfahren hergestellt. Bei dem Vergleichsruß 3 handelt es sich um Corax® N 220 von Evonik Degussa GmbH. Bei dem Vergleichsruß 4 handelt es sich um Corax® N 134 von Evonik Degussa GmbH.

Beispiel 2 (Gummitechnische Untersuchungen in Naturkautschuk):

Die für die Naturkautschukmischungen verwendete Rezeptur ist in der folgenden Tabelle 3 angegeben. Dabei bedeutet die Einheit phr Gewichtsteile, bezogen auf 100 Teile des eingesetzten Rohkautschuks.

Das allgemeine Verfahren zur Herstellung von Kautschukmischungen und deren Vulkanisate ist in dem Buch: "Rubber Technology Handbook", W. Hofmann, Hanser Verlag 1994 beschrieben.

Tabelle 3:

|  | phr |
|---|---|
| **Stufe 1** | |
| SMR 10 ML4=60-70 | 100,0 |
| Ruß | 52,0 |
| Stearinsäure | 3,0 |
| ZnO | 3,0 |
| Vulkanox® 4020 | 1,0 |
| Vulkanox® HS | 1,0 |
| Protektor® G3108 | 1,0 |
| | |
| **Stufe 2** | |
| Batch Stufe 1 | |
| Schwefel | 1,5 |
| Rhenogran® TBBS-80 | 1,2 |

Bei dem Naturkautschuk SMR10 ML4 = 60-70 handelt es sich um SMR10, welcher vor dem Einmischprozess nach den üblichen Verfahren auf einem Walzwerk mastiziert wird und nach dem Mastizieren mindestens 24 Stunden, höchstens jedoch 1 Woche bei Raumtemperatur zwischengelagert wird. Der ML 1+4 (100°C)-Wert des mastizierten SMR10 liegt dabei in einem Bereich von 60-70. Der ML 1+4 - Wert wird gemessenen nach DIN 53523/3.

Bei Vulkanox® 4020 handelt es sich um das Alterungsschutzmittel 6PPD der Firma Lanxess AG. Bei Vulkanox® HS handelt es sich um das Alterungsschutzmittel TMQ der Firma Lanxess AG. Protektor® G3108 ist ein Ozonschutzwachs der Firma Paramelt B.V.. Rhenogran® TBBS-80 ist ein Vulkanisationsbeschleuniger von Typ TBBS, der 80% Wirkstoff enthält, von Rhein-Chemie GmbH.

Die Kautschukmischungen werden in einem Innenmischer entsprechend der Mischvorschrift in Tabelle 4 hergestellt.

Tabelle 4

**Stufe 1**
*Einstellungen*

| Mischaggregat | Werner und Pfleiderer GK 1,5N |
|---|---|
| Drehzahl | 65 upm |
| Stempeldruck | 5,5 bar |
| Leervolumen | 1,6 l |
| Füllgrad | 0,70 |
| Durchflusstemperatur | 70 °C |

(fortgesetzt)

| *Mischvorgang* | |
|---|---|
| 0 bis 1 min | Naturkautschuk |
| 1 bis 2 min | 1/2 Ruß |
| 2 bis 5 min | 1/2 Ruß, Stearinsäure, ZnO, Vulkanox, Protektor |
| 5 min | säubern |
| 5 bis 6 min | mischen und ausfahren |
| Batchtemperatur | 145 - 155°C |
| Lagerung | 24 h bei Raumtemperatur |
| **Stufe 2** | |
| *Einstellungen* | |
| Mischaggregat | Werner und Pfleiderer GK 1,5N |
| Drehzahl | 40 upm |
| Stempeldruck | 5,5 bar |
| Leervolumen | 1,6 l |
| Füllgrad | 0,68 |
| Durchflusstemperatur | 60 °C |
| *Mischvorgang* | |
| 0 bis 2 min | Batch Stufe 1, Schwefel, TBBS-80 |
| Batchtemperatur | 100 - 110°C |
| 2 min | ausfahren und auf Labormischwalzwerk Troester WNU 1 (Durchmesser 150 mm, Länge 350 mm, Durchflusstemperatur 40/50°C, UPM 17/21) |
| | Fell bilden |
| | Homogenisieren: |
| | 3* links, 3* rechts einschneiden und umklappen sowie |
| | 3* bei weitem Walzenspalt (6 mm) und |
| | 3* bei engem Walzenspalt (3 mm) stürzen |
| | Fell ausziehen. |
| Batchtemperatur | < 110°C |

In Tabelle 5 sind die Methoden für die Gummitestung zusammengestellt.

Tabelle 5

| Physikalische Testung / Bedingungen | Norm |
|---|---|
| Zugversuch am Ring 1, 23°C<br>    Zugfestigkeit (MPa)<br>    Spannungswert bei 100% Dehnung (MPa)<br>    Spannungswert bei 300% Dehnung (MPa)<br>    Bruchdehnung (%) | DIN 53504, ISO 37 |
| Goodrich-Flexometertest, 0,175 inch Hub, 2 h, 23 °C<br>    Einstichtemperatur (°C) | DIN 53533, ASTM D 623 A |
| Shore Härte, 23°C<br>    Shore A | DIN 53505 |
| DIN-Abrieb, 10 N, 23 °C<br>    Abrieb (mm*mm*mm) | DIN 53 516 |

Die Tabelle 6 zeigt die Ergebnisse der gummitechnischen Prüfung. Die Vulkanisationszeit der Mischungen beträgt 17 Minuten.

Tabelle 6

| Naturkautschuk-Mischung | | Gruppe 1 | | | Gruppe 2 | | Gruppe 3 | | Gruppe 4 | |
|---|---|---|---|---|---|---|---|---|---|---|
| | | Mischung 1 | Mischung 2 | Mischung 3 | Mischung 4 | Mischung 5 | Mischung 6 | Mischung 7 | Mischung 8 | Mischung 9 |
| **Ruß (52 phr)** | | **Vergleichsruß 1** | **Vergleichsruß 2** | **Ruß 1** | **Vergleichsruß 3** | **Ruß 2** | **Vergleichsruß 4** | **Ruß 3** | **Vergleichsruß 5** | **Ruß 4** |
| Gummitechnische Daten Vulkanisationszeit | min | 17 | 17 | 17 | 17 | 17 | 17 | 17 | 17 | 17 |
| **Zug-Dehnungs-Eigenschaften** | | | | | | | | | | |
| Zugfestigkeit | MPa | 23,6 | 21,8 | 21,6 | 23,8 | 23,6 | 25,6 | 24,0 | 25,7 | 24,7 |
| Spannungswert 100% | MPa | 2,7 | 2,4 | 2,8 | 2,3 | 2,4 | 2,3 | 2,4 | 2,6 | 2,4 |
| Spannungswert 300% | MPa | 15,0 | 13,6 | 15,5 | 12,3 | 13,6 | 12,9 | 13,2 | 14,0 | 12,6 |
| Bruchdehnung | % | 440 | 430 | 390 | 490 | 460 | 510 | 480 | 480 | 490 |
| Shore Härte | Shore A | 69 | 66 | 69 | 67 | 66 | 67 | 68 | 70 | 68 |
| DIN Abrieb | mm$^3$ | 80 | 87 | 79 | 102 | 99 | 96 | 93 | 97 | 96 |
| Abriebwiderstand-Index | | **100** | **92** | **101** | **100** | **103** | **100** | **103** | **100** | **101** |
| **Viskoelastische Eigenschaften** | | | | | | | | | | |
| Goodrich Flexometer - Einstichtemperatur | °C | 106 | 92 | 93 | 104 | 86 | 105 | 100 | 117 | 99 |
| Rollwiderstand-Index | | **100** | **115** | **114** | **100** | **121** | **100** | **105** | **100** | **118** |

13

Je höher der Wert für den DIN Abrieb (mm$^3$) ist, desto schlechter ist der Abriebwiderstand der Gummimischung. Der Abriebwiderstand-Index wird deshalb für jeden Ruß innerhalb der jeweiligen Rußgruppe wie folgt berechnet:

Abriebwiderstand-Index = (DIN-Abrieb des Referenzrußes in der Gruppe / DIN-Abrieb) * 100.

Der Referenzruß in Gruppe 1 ist Vergleichsruß 1, der Referenzruß in Gruppe 2 ist Vergleichsruß 3, der Referenzruß in Gruppe 3 ist Vergleichsruß 4 und der Referenzruß in Gruppe 4 ist Vergleichsruß 5.

Ein Abriebwiderstand-Index > 100 bedeutet deshalb verbesserten Abriebwiderstand, Werte < 100 verschlechterten Abriebwiderstand, relativ zum jeweiligen Referenzruß in der Gruppe.

Je höher der Wert für die Einstichtemperatur (°C), desto höher ist die Wärmebildung und damit die Hysterese bei dynamischer Beanspruchung in der Gummimischung und desto schlechter damit der zu erwartende Rollwiderstand. Der Rollwiderstand-Index wird deshalb für jeden Ruß innerhalb der jeweiligen Rußgruppe wie folgt berechnet:

Rollwiderstand-Index = (Einstichtemperatur des Referenzrußes in der Gruppe / Einstichtemperatur) * 100.

Ein Rollwiderstand-Index > 100 bedeutet deshalb verbesserten und damit erniedrigten Rollwiderstand, Werte < 100 verschlechterten Rollwiderstand, relativ zum jeweiligen Referenzruß in der Gruppe.

Die Ergebnisse der Tabelle 6 zeigen, dass die nach dem erfindungsgemäßen Verfahren hergestellten Ruße mit einem FP Index > 0 jeweils eine bessere Balance hinsichtlich Abriebwiderstand und Rollwiderstand zeigen als die Vergleichruße mit einem FP-Index < 0, bei einem ausgewogenen allgemeinen gummitechnischen Wertebild.

Beispiel 3 (Gummitechnische Untersuchungen in E-SBR):

Die für die E-SBR Mischungen verwendete Rezeptur ist in der folgenden Tabelle 7 angegeben.

Tabelle 7:

|  | phr |
|---|---|
| **Stufe 1** |  |
| Krynol® E-SBR 1712 | 137,5 |
| Ruß | 80,0 |
| Stearinsäure | 2,0 |
| ZnO | 3,0 |
| Vulkanox® 4020 | 1,5 |
| Protektor® G3108 | 1,0 |
|  |  |
| **Stufe 2** |  |
| Batch Stufe 1 |  |
|  |  |
| **Stufe 3** |  |
| Batch Stufe 2 |  |
| Schwefel | 1,75 |
| Vulkacit® CZ/EG-C | 1,50 |
| Perkazit TBZTD-PDR-D | 0,20 |

Bei dem E-SBR Krynol® 1712 handelt es sich um einen mit 37,5 phr Öl verstreckten E-SBR Kautschuk der Firma Lanxess AG.

Bei dem Vulkanisationsbeschleuniger Vulkacit® CZ/EG-C handelt es sich um CBS der Firma Lanxess AG. Bei dem Vulkanisationsbeschleuniger Perkacit TBZTD-PDR-D handelt es sich um TBZTD der Firma Flexsys N.V..

Die Kautschukmischungen werden in einem Innenmischer entsprechend der Mischvorschrift in Tabelle 8 hergestellt.

Tabelle 8

**Stufe 1**

*Einstellungen*

| | |
|---|---|
| Mischaggregat | Werner und Pfleiderer GK 1,5N |
| Drehzahl | 60 upm |
| Stempeldruck | 5,5 bar |
| Leervolumen | 1,6 l |
| Füllgrad | 0,70 |
| Durchflusstemperatur | 60 °C |

*Mischvorgang*

| | |
|---|---|
| 0 bis 1 min | Kautschuk |
| 1 bis 3 min | 1/2 Ruß |
| 3 bis 4 min | 1/2 Ruß, Vulkanox, Protektor, ZnO, Stearinsäure |
| 4 min | säubern |
| 4 bis 5 min | mischen und ausfahren |
| Batchtemperatur | 145 - 155 °C |
| Lagerung | 24 h bei Raumtemperatur |

**Stufe 2**

*Einstellungen*

| | |
|---|---|
| Mischaggregat | Werner und Pfleiderer GK 1,5N |
| Drehzahl | 70 upm |
| Stempeldruck | 5,5 bar |
| Leervolumen | 1,6 l |
| Füllgrad | 0,68 |
| Durchflusstemperatur | 80 °C |

*Mischvorgang*

| | |
|---|---|
| 0 bis 2 min | Batch Stufe 1 |
| 2 bis 5 min | Batchtemperatur 150 °C halten durch Drehzahlvariation |
| 5 min | ausfahren |
| Batchtemperatur | 145 - 155 °C |
| Lagerung | 24 h bei Raumtemperatur |

**Stufe 3**

*Einstellungen*

| | |
|---|---|
| Mischaggregat | Werner und Pfleiderer GK 1,5N |
| Drehzahl | 30 upm |
| Stempeldruck | 5,5 bar |
| Leervolumen | 1,6 l |
| Füllgrad | 0,66 |
| Durchflusstemperatur | 40 °C |

*Mischvorgang*

| | |
|---|---|
| 0 bis 2 min | Batch Stufe 2, Vulkacit, Perkazit, Schwefel |
| Batchtemperatur | < 110°C |
| 2 min | ausfahren und auf Labormischwalzwerk Troester WNU 1 (Durchmesser 150 mm, Länge 350 mm, Durchflusstemperatur 40/50°C, UPM 17/21) |
| | Fell bilden |
| | Homogenisieren: |
| | 3* links, 3* rechts einschneiden und umklappen sowie 10* bei weitem Walzenspalt (6 mm) |
| | Fell ausziehen. |
| Batchtemperatur | < 110°C |

Die Tabelle 9 zeigt die Ergebnisse der gummitechnischen Prüfung. Die Vulkanisationszeit der Mischungen beträgt 13 Minuten.

Tabelle 9

| E-SBR Mischung | | Gruppe 5 | | | Gruppe 6 | | Gruppe 7 | | Gruppe 8 | |
|---|---|---|---|---|---|---|---|---|---|---|
| | | Mischung 10 | Mischung 11 | Mischung 12 | Mischung 13 | Mischung 14 | Mischung 15 | Mischung 16 | Mischung 17 | Mischung 18 |
| **Ruß (80 phr)** | | **Vergleichsruß 1** | **Vergleichsruß 2** | **Ruß 1** | **Vergleichsruß 3** | **Ruß 2** | **Vergleichsruß 4** | **Ruß 3** | **Vergleichsruß 5** | **Ruß 4** |
| **Gummitechnische Daten** | | | | | | | | | | |
| Vulkanisationszeit | min | 13 | 13 | 13 | 13 | 13 | 13 | 13 | 13 | 13 |
| **Zug-Dehnungs-Eigenschaften** | Ring | | | | | | | | | |
| Zugfestigkeit | MPa | 18,8 | 19,6 | 19,8 | 16,9 | 18,0 | 17,9 | 19,4 | 18,5 | 20,5 |
| Spannungswert 100% | MPa | 2,3 | 2,0 | 2,1 | 1,8 | 2,0 | 1,9 | 2,0 | 2,1 | 1,8 |
| Spannungswert 300% | MPa | 12,3 | 11,6 | 11,7 | 9,6 | 10,8 | 10,0 | 10,3 | 10,4 | 9,0 |
| Bruchdehnung | % | 410 | 450 | 440 | 450 | 440 | 440 | 480 | 450 | 520 |
| Shore-Härte | Shore A | 70 | 66 | 69 | 67 | 67 | 68 | 69 | 72 | 68 |
| DIN Abrieb | mm$^3$ | 68 | 70 | 66 | 74 | 75 | 81 | 77 | 104 | 101 |
| Abriebwiderstand-Index | | **100** | **97** | **103** | **100** | **99** | **100** | **105** | **100** | **103** |
| **Viskoelastische Eigenschaften** | | | | | | | | | | |
| Goodrich Flexometer | | | | | | | | | | |
| - Einstichtemperatur | °C | 148 | 127 | 127 | 142 | 124 | 143 | 143 | 161 | 138 |
| Rollwiderstand Index | | **100** | **117** | **117** | **100** | **115** | **100** | **100** | **100** | **117** |

EP 2 193 173 B2

Der Referenzruß in Gruppe 5 ist Vergleichsruß 1, der Referenzruß in Gruppe 6 ist Vergleichsruß 3, der Referenzruß in Gruppe 7 ist Vergleichsruß 4 und der Referenzruß in Gruppe 8 ist Vergleichsruß 5.

Die Ergebnisse der Tabelle 9 zeigen, dass die nach dem erfindungsgemäßen Verfahren hergestellten Ruße mit einem FP Index > 0 jeweils eine bessere Balance hinsichtlich Abriebwiderstand und Rollwiderstand zeigen als die Vergleichruße mit einem FP-Index < 0, bei einem ausgewogenen allgemeinen gummitechnischen Wertebild.

**Patentansprüche**

1. Verfahren zur Herstellung eines Rußes, der **dadurch gekennzeichnet** is, dass die CTAB-Oberfläche 100 - 160 $m^2/g$, das Quartile Ratio größer 1,60 und der FP-Index > 0 ist, wobei das Quartile Ratio und der FP-Index gemäß der Vorschrift auf Seite 4, Zeile 3, bis Seite 7, Zeile 22, bestimmt wird, in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser, **dadurch gekennzeichnet,**
dass 60-90 Gew.-% des Rußrohstoffes im ersten Drittel der Reaktionszone und die restliche Menge des Rußrohstoffes stromaufwärts an mindestens einer weiteren Stelle in den Reaktor eingedüst wird und der Brennstoff so geführt wird, dass beim ersten Auftreffen auf den Rußrohstoff 90 - 100 Gew.-% des Brennstoffes verdampft sind und 5 ms vor Auftreffen auf den Rußrohstoff 80 - 99 Gew.-% des Brennstoffes verdampft sind.

**Claims**

1. A process for producing a carbon black **characterized in that** the CTAB surface area is from 100 to 160 $m^2/g$, the quartile ratio is greater than 1.60, and the FP index is > 0, wherein the quartile ratio and the FP index are determined in accordance with the instructions given on page 4, line 3, to page 7, line 22, in a furnace-black reactor which comprises, along the reactor axis, a combustion zone, a reaction zone, and a termination zone, via production of a stream of hot exhaust gas in the combustion zone via combustion of a fuel in an oxygen-containing gas and passage of the exhaust gas from the combustion zone via the reaction zone into the termination zone, mixing to incorporate a feedstock used for the carbon black into the hot exhaust gas in the reaction zone, and termination of carbon-black formation in the termination zone via introduction of water spray, **characterized in that** from 60 to 90% by weight of the feedstock used for the carbon black are introduced through a nozzle within the first third of the reaction zone, and the remaining amount of the feedstock used for the carbon black is introduced through a nozzle upstream at at least one further point into the reactor, and the fuel is conducted in such a way that on first encounter with the feedstock used for the carbon black from 90 to 100% by weight of the fuel has vaporized, and 5 ms prior to encountering the feedstock used for the carbon black from 80 to 99% by weight of the fuel has vaporized.

**Revendications**

1. Procédé de préparation d'un noir de fumée, **caractérisé en ce que** l'aire spécifique CTAB vaut de 100 à 160 $m^2/g$, son rapport de quartiles est supérieur à 1,60 et son indice FP est supérieur à 0, étant entendu que le rapport de quartiles et l'indice FP sont déterminés selon les modes opératoires indiqués en page 4 ligne 3 jusque page 7 ligne 22, dans un réacteur à noir de fumée de type four comportant, le long de l'axe du réacteur, une zone de combustion, une zone de réaction et une zone d'arrêt de réaction, par production d'un courant de gaz résiduaire chaud dans la zone de combustion, ceci par combustion d'une matière combustible dans un gaz contenant de l'oxygène, acheminement du gaz résiduaire depuis la zone de combustion, par la zone de réaction, jusque dans la zone d'arrêt de réaction, incorporation d'une matière première pour noir de fumée dans le gaz résiduaire chaud, dans la zone de réaction, et arrêt de la formation de noir de fumée dans la zone d'arrêt de réaction par pulvérisation d'eau, **caractérisé en ce qu'**une fraction de 60 à 90 % en poids de la matière première pour noir de fumée est injectée dans le premier tiers de la zone de réaction et le reste de matière première pour noir de fumée est injecté en amont, en au moins un autre point dans le réacteur, et **en ce que** la matière combustible est amenée de telle sorte que, lors du premier impact sur la matière première pour noir de fumée, de 90 à 100 % en poids de la matière combustible sont vaporisés, et que, 5 ms avant l'impact sur la matière première pour noir de fumée, de 80 à 99 % en poids de la matière combustible sont vaporisés.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050256249 A
- EP 0754735 A
- EP 0949303 A
- EP 1783178 A
- WO 9113944 A
- US 4327069 A

**In der Beschreibung aufgeführte Nicht-Patentliteratur**

- **G. KRAUS.** *Angewandte Makromolekulare Chemie,* 1977, vol. 60 (61), 215
- **W.M. HESS et al.** *Rubber Chemistry and Technology,* vol. 56, 390
- **C.J. STACY et al.** *Rubber Chemistry and Technology,* vol. 48, 538
- Das allgemeine Verfahren zur Herstellung von Kautschukmischungen und deren Vulkanisate ist in dem Buch. **W. HOFMANN.** Rubber Technology Handbook. Hanser Verlag, 1994